# FASCICULE DE BREVET EUROPEEN

(11) **EP 3 786 913 B1**
(45) Date de publication et mention de la délivrance du brevet: **13.12.2023**
(21) Numéro de dépôt: 19193624.4
(22) Date de dépôt: 26.08.2019
(51) Int. Cl.: G08B 21/02

(54) **SYSTEME ANTIVOL POUR MAGASINS**
DIEBSTAHLSCHUTZSYSTEM FÜR LÄDEN
ANTI-THEFT SYSTEM FOR SHOPS

(43) Date de publication de la demande: 03.03.2021
(73) Titulaire: The Swatch Group Research and Development Ltd, 2074 Marin (CH)
(72) Inventeur: LAMONTAGNE, Alexandre, 2036 Cormondrèche (CH); BREGNARD, Jonathan, 2024 St-Aubin-Sauges (CH); NICOLAS, Cédric, 2000 Neuchâtel (CH)
(74) Mandataire: ICB SA

(56) Documents cités:
- GB-A- 2 505 324
- US-A1- 2019 122 519

## Description

### DOMAINE TECHNIQUE DE L'INVENTION

La présente invention se rapporte aux systèmes de sécurité applicables dans des boutiques de produits de luxe, tels que des lunettes ou des montres.

### ETAT DE LA TECHNIQUE

Pour protéger les produits exposés dans une boutique, des systèmes sont connus qui utilisent des puces RFID (Radio Frequency Identification) attachées aux produits. Ces systèmes nécessitent l'utilisation d'une fixation mécanique encombrante de la puce, à enlever en caisse lors de l'achat à l'aide d'un dispositif spécial ou d'une paire de ciseaux, ainsi que l'installation d'une infrastructure encombrante, notamment des portiques installés à la sortie du magasin.

Le document EP 2 575 112 A1 divulgue un système d'inventaire et d'antivol utilisant des transpondeurs (TAG) pourvus de puces RFID, qui sont interrogés de manière ponctuelle ou en continu par un lecteur RFID, qui transmet les données à une base de données. Le transpondeur ou tag comprend un mécanisme d'accouplement, qui est ouvert à un point d'achat. La puce enregistre le nombre de fois que le tag a été ouvert et fermé. Cette information fait partie des données transmises. Une ouverture non-autorisée est ainsi détectée. Ce système requiert toujours les portiques et l'ouverture du tag en caisse par un dispositif spécial. Des mouvements du produit à l'intérieur du magasin ne sont pas détectés.

On connait également les systèmes antivols de type filaire qui empêchent qu'un produit installé sur un présentoir soit éloigné dudit présentoir, utilisant un fil entre le produit et le présentoir. Ces systèmes sont capables aussi de gérer la présence des produits sur les présentoirs. Mais ces systèmes sont encombrants et souvent ils empêchent le client d'essayer le produit.

Le document US 2019/0122519 A1 décrit un système pour détecter le placement ou le mauvais placement d'un objet ou produit, qui comprend une étiquette sans fil. L'étiquette comprend donc un transpondeur relié mécaniquement à un produit à surveiller ou détecter dans une zone proche définie. Un dispositif électronique fixe est placé à proximité de l'étiquette pour détecter automatiquement les signaux provenant de l'étiquette d'une première technologie et déterminer sa position. Une transmission de signaux d'une seconde technologie est effectuée périodiquement du dispositif à un dispositif externe pouvant être en dehors de la zone proche définie. Le dispositif externe détermine si le dispositif de proximité et l'étiquette sont dans une zone proche définie. Il est encore prévu un deuxième dispositif électronique, qui n'est pas associé à l'étiquette pour détecter automatiquement les signaux de l'étiquette et déterminer une position, et un identifiant pour l'étiquette. Il n'est pas prévu d'autres moyens pour être connectable sans la présence d'un tag.

### RESUMÉ DE L'INVENTION

La présente invention vise à prévoir un système antivol qui demande une infrastructure moins coûteuse et qui permet de gérer la présence des produits, sans nécessiter des tags pourvus de serrures ou d'autres mécanismes encombrants.

Ce but est atteint par le système selon les revendications attachées. L'invention concerne un système antivol applicable dans un environnement commercial tel qu'un magasin de montres. Les produits exposés dans le magasin sont sécurisés par un tag électronique attaché au produit. Le tag est pourvu d'une puce qui émet un premier signal qui n'est recevable que dans un périmètre défini autour de la puce. Dans ce périmètre se trouve un dispositif de transmission électronique qui envoie les données transmises dans le premier signal sous la forme d'un deuxième signal qui contient également une valeur relative à la distance entre le tag et le dispositif de transmission. Le deuxième signal est géré par un ou plusieurs ordinateurs, de préférence du type portable, qui sont munis d'une application numérique configurée pour analyser le deuxième signal et notamment de vérifier la présence des tags dans une zone de sécurité définie autour du dispositif de transmission.

D'autres caractéristiques et avantages de la présente invention apparaîtront dans la description suivante de modes de réalisation préférés, présentés à titre d'exemple non limitatif en référence aux dessins annexés.

### BRÈVE DESCRIPTION DES FIGURES

La figure 1 représente de manière schématique un environnement dans lequel est intégré un système de sécurité selon l'invention.
Les figures 2a et 2b représentent un tag électronique (transpondeur) utilisable dans un système de sécurité selon l'invention.

### DESCRIPTION DETAILLEE DE L'INVENTION

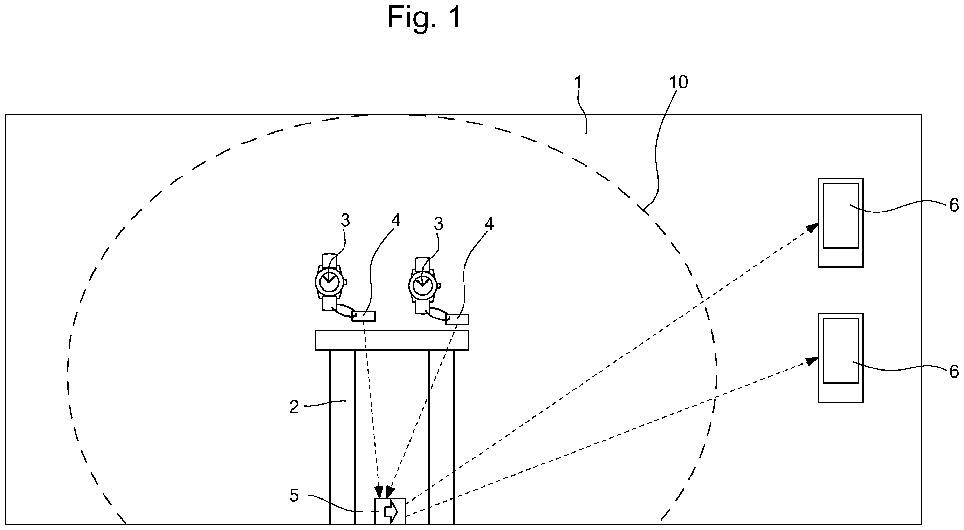

La figure 1 représente une configuration typique d'un système antivol selon l'invention. L'espace d'une boutique de montres est représentée comme un rectangle 1. A l'intérieur de la boutique se trouve une table 2 sur laquelle sont exposées plusieurs montres 3. Des tags électroniques 4 sont attachés aux montres 3. Chaque tag (transpondeur) comprend une puce BLE (Bluetooth Low Energy en terminologie anglaise). La technologie BLE est connue en soi et permet la transmission par la puce BLE de paquets de données, appelés trames d'annonce ou publicitaires ("advertising" en terminologie anglaise). Une séquence continue de ces trames publicitaires représente le 'premier signal' cité dans les revendications attachées. De manière caractéristique pour la technologie BLE, le premier signal n'est recevable que dans un périmètre limité autour des tags 4.

Les trames publicitaires transmises par les tags comprennent un code unique pour chaque montre 3 qui permet l'identification des montres exposées. A un endroit fixe par rapport à la table et à l'intérieur des périmètres de tous les tags 4 quand les montres 3 sont positionnées à des endroits désignés sur la table 2, un dispositif de transmission électronique 5 (passerelle de connexion du type 'gateway BLE/WiFi') est installé, qui reçoit les trames publicitaires des différents tags 4. Une passerelle de connexion ("gateway BLE/wifi" en terminologie anglaise) est bien connue en soi et permet de transmettre les informations encodées dans les trames publicitaires via un lien wifi. La passerelle de connexion 5 utilisée dans l'invention transmet également pour chaque tag une valeur appelée RSSI (Received Signal Strength Indication en terminologie anglaise), qui indique la force du signal BLE reçu par la passerelle de connexion 5.

Selon un mode d'application préféré, une ou plusieurs des personnes affiliées au magasin disposent d'un ordinateur portable du type téléphone portable ou tablette 6, qui est en communication continue avec la passerelle BLE/WiFi 5 par le lien WiFi, et qui reçoit ainsi le 'deuxième signal' cité dans les revendications. Le deuxième signal est généré par une technologie (WiFi) différente de la technologie (BLE) qui génère les trames publicitaires. Le deuxième signal comprend au moins les informations d'identification codées dans les trames publicitaires par les différents tags et les valeurs RSSI.

Une zone de sécurité 10 paramétrable est définie autour de la position de la passerelle de connexion 5. Le deuxième signal est synchronisé avec les trames publicitaires envoyées par l'ensemble des tags à l'intérieur de la zone de sécurité. Le format du deuxième signal consiste en la concaténation des trames publicitaires de tous les tags à l'intérieur de la zone 10, avec pour chaque tag l'intégralité des données envoyées ainsi que la valeur RSSI.

Chaque portable 6 est muni d'une application numérique, qui vérifie en temps réel les valeurs RSSI pour les différents tags 4, et qui génère une alerte quand le RSSI d'un tag 4 passe en dessous d'un seuil prédéfini, indiquant que le tag a été déplacé hors de la zone de sécurité 10. Ceci indique que le tag a été éloigné de la zone 10 par une personne non-autorisée. L'application va afficher sur l'écran du portable 6 des informations pour identifier le tag en question et le produit auquel il est attaché. Ces informations sont dérivées des trames publicitaires transmises par le tag 4.

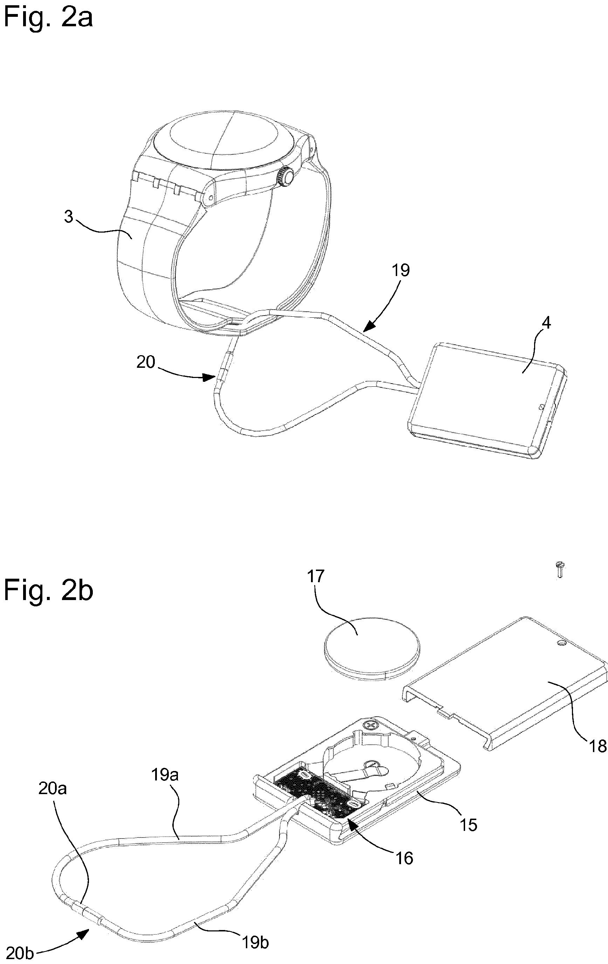

Selon une forme d'exécution préférée, l'application numérique est également configurée pour générer une alerte quand la connexion entre un tag 4 et la passerelle de connexion 5 est perdue. A cette fin, les tags 4 sont attachés aux montres 3 de sorte que la séparation du tag 4 de la montre 3 par une personne non-autorisée va automatiquement désactiver la puce BLE à l'intérieur du tag 4. Un tag 4 de ce type est représenté aux figures 2a et 2b. Le tag ou transpondeur comprend un boîtier 15 en plastique dans lequel sont logées la puce BLE 16 et une source d'énergie qui peut être une batterie 17. Un couvercle 18 par exemple en plastique est monté de manière amovible sur le boîtier 15 et peut comporter une étiquette qui affiche le prix du produit exposé. Le tag 4 est attaché au produit par une boucle 19, qui comprend deux brins 19a et 19b comprenant ou consistant en des fils électriques. La boucle peut être ouverte et fermée par un raccordement 20 à baïonnette ou à vis, dont les deux parties 20a et 20b sont fixées de manière conductrice aux extrémités des deux brins 19a et 19b.

Selon une forme préférée, la boucle est composée de fibres synthétiques associées à des fils électriques donnant l'aspect extérieur d'un fil de nylon (type de matériau 'E-Textile'). Selon une forme d'exécution, la boucle forme une connexion électrique qui fait partie du circuit d'alimentation de la puce 16, quand la boucle est fermée. Si une personne non-autorisée arrache le tag, en coupant la boucle 19 ou en ouvrant le raccordement 20, la puce BLE 16 arrête la transmission de trames publicitaires, ce qui génère une alerte sur les portables 6. Le message d'alerte identifie la ou les montres spécifiques sur base des codes intégrés dans les trames publicitaires.

Selon une autre forme d'exécution, la boucle 19 fermée fait également partie d'un circuit connecté à la puce BLE 16 mais sans que l'ouverture de la boucle interrompe l'alimentation de la puce. Cette ouverture sera néanmoins détectée par le circuit, ce qui déclenche la transmission par la puce pendant une période prédéfinie, par exemple quelques minutes, de trames publicitaires qui contiennent un message d'alerte. Ce message va avertir les utilisateurs des portables 6 qu'un tag a été enlevé de manière non-autorisée. Après la période prédéfinie, la puce BLE 16 peut être désactivée.

Selon une forme d'exécution, les tags 4 sont pourvus d'un accéléromètre qui génère un signal en fonction des mouvements du tag 4 à l'intérieur de la zone de sécurité 10, et les données relatives à ces mouvements sont intégrées dans les trames publicitaires, et transmises vers les portables 6. Les applications numériques des portables 6 sont configurées pour interpréter les données de mouvement, et éventuellement de générer une alerte en cas de mouvements non-autorisés. Ceci permet de sécuriser les produits à plusieurs niveaux ou d'adapter les niveaux de sécurité en fonction des produits. Par exemple on peut installer une table de montres qui doit générer une alerte dès qu'une montre est déplacée d'un présentoir sur lequel elle est exposée, et une autre table sur laquelle les montres peuvent être manipulées par les clients sans déclencher d'alerte, tout en transmettant les données relatives aux mouvements. Ces données peuvent être stockées dans le téléphone portable ou dans un ordinateur central, et servir comme base d'études de marketing par exemple.

Le système de sécurité peut comprendre plusieurs passerelles de connexion 5 associées à plusieurs groupes de tags 4 à l'intérieur d'un magasin, par exemple une passerelle de connexion pour chaque table d'exposition dans une boutique de montres. Des zones de sécurité 10 distinctes sont alors attribuées aux passerelles de connexion 5 respectives. Chaque portable 6 peut recevoir les informations pour l'ensemble des passerelles de connexion 5 et donc pour tous les tags 4 qui sont actifs dans la boutique. Chaque portable reçoit les mêmes informations envoyées par la ou les passerelles 5. Selon une forme d'exécution préférée, l'application numérique est configurée telle que chaque portable peut filtrer différemment en fonction des besoins de l'utilisateur. Par exemple, un utilisateur de portable peut sélectionner une zone de protection 10 spécifique ou il peut choisir d'afficher seulement les informations contenues dans les trames publicitaires, sans les informations sur le déplacement des tags ou vice versa.

Avant qu'un tag puisse être introduit dans le système, suivant l'invention une procédure d'appariement entre le tag et le ou les portables est nécessaire. La procédure consiste généralement en une communication entre le tag et le portable, pendant laquelle le portable reçoit les informations codées dans le tag et enregistre le tag sur base des données d'identification du tag et du produit associé. Dans le cas des tags BLE, cette procédure d'appariement est effectuée de préférence en réalisant un lien BLE direct entre le portable et le tag 4, i.e. un lien qui ne passe pas par la passerelle de connexion 5. A cette fin, la puce BLE opère en mode 'connectable' lors de la procédure d'appariement. Dès que l'appariement est effectué, la puce passe en mode 'non-connectable', ce qui interdit une nouvelle connexion et donc un nouvel appariement. Pour retourner dans le mode « connectable », un redémarrage du tag est nécessaire par exemple en enlevant sa pile.

De préférence, le premier signal est crypté, pour sécuriser la communication entre les tags et les portables. Une clé de cryptage peut être communiquée aux tags par un des portables lors de la procédure d'appariement. En utilisant cette clé, les portables sont capables de déchiffrer les données.

Selon une forme d'exécution préférée, les trames publicitaires sont partiellement cryptées. La partie cryptée comprend notamment une estampille temporelle et d'autres données. Cependant une partie des données n'est pas cryptée, ce qui permet de les lire sans être apparié. Les données cryptées, qui comprennent une estampille temporelle, ne sont lisibles que par un ou plusieurs dispositifs portables ou téléphones portables, qui connaissent la clé de cryptage. Ce cryptage évite que toute personne non autorisée puisse lire ces informations ou données cryptées, telles que des alarmes ou erreurs ou autre. De plus, l'ajout de l'estampille temporelle dans la partie cryptée permet de faire varier les données en fonction du temps et donc d'éviter qu'une personne non autorisée fasse un clone du tag.

Un certain nombre d'informations contenues dans les trames publicitaires sont visibles en clair, telles que l'état de la batterie du tag par exemple, de manière à pouvoir les lire sans être apparié. Par contre, d'autres données sont nécessairement cryptées, telles qu'une estampille temporelle et des alarmes par exemple. Les informations cryptées de la trame publicitaire ne peuvent être lues, que si la clé de cryptage est connue.

Comme indiqué ci-dessus, une estampille temporelle est contenue dans les trames publicitaires cryptées. Il peut s'agir d'une valeur temporelle incrémentée chaque seconde. L'estampille temporelle permet de changer complètement la trame publicitaire cryptée, ce qui empêche le clonage des tags. Il est essentiellement impossible de prédire la trame suivante sans connaître la clé de cryptage et l'algorithme de cryptage. Une trame, qui n'évolue plus ou qui est erronée, est considérée comme une alarme de sabotage.

## Revendications

1. Système antivol pour sécuriser des produits à l'intérieur d'un espace défini (1), le système comprenant :
- au moins un tag (4) pourvu d'une puce électronique (16) capable de transmettre un premier signal de manière répétitive et généré dans une première technologie, qui est la technologie BLE (Bluetooth Low Energy) et dans lequel le premier signal consiste en une séquence de trames publicitaires en format BLE, le signal n'étant recevable que dans un périmètre limité autour du tag (4), le tag étant relié à un produit exposé par une connexion mécanique déconnectable, le signal comprenant des informations qui permettent d'identifier le produit,
- un dispositif de transmission électronique (5), installé à une position fixe à l'intérieur dudit périmètre, le dispositif étant capable de recevoir le premier signal quand le dispositif se trouve dans ledit périmètre, et d'envoyer de manière répétitive un deuxième signal recevable à l'extérieur du périmètre et généré dans une deuxième technologie différente de la première technologie, le deuxième signal comprenant au moins les informations d'identification du produit ainsi qu'une valeur liée à la distance entre le tag et le dispositif de transmission, et
- au moins un ordinateur fixe ou portable (6), configuré pour recevoir le deuxième signal et muni d'une application numérique qui est configurée pour gérer, sur la base dudit deuxième signal, la présence du tag dans une zone de sécurité (10) définie autour du dispositif de transmission (5), l'ordinateur fixe ou portable (6) étant configuré également pour effectuer une procédure d'appariement du TAG (4) en réalisant un lien direct selon la première technologie avec le TAG (4) sans passer par le dispositif de transmission électronique (5), quand la puce électronique (16) opère en mode dit connectable, pour des tags BLE, la procédure d'appariement étant effectuée en réalisant un lien BLE direct entre le portable et le tag (4), un lien, qui ne passe pas par le dispositif de transmission électronique (5), le tag BLE (4) opérant en mode connectable lors de la procédure d'appariement, après que l'appariement a été effectué, le tag (4) passant en mode non connectable pour interdire une nouvelle connexion et donc un nouvel appariement.

2. Système antivol selon la revendication 1, **caractérisé en ce que** l'application numérique génère une alerte quand le tag (4) est déplacé hors de la zone de sécurité.

3. Système antivol selon la revendication 1, **caractérisé en ce qu'**il comprend plusieurs desdits dispositifs de transmission électronique (5) distribués dans ledit espace (1), de manière que des zones de sécurité (10) distinctes sont attribuées aux dispositifs (5), et dans lequel chaque dispositif (5) est en communication continue avec un ou plusieurs tags (4) reliés aux produits exposés dans les zones respectives, et dans lequel le ou les ordinateurs sont en communication continue avec chacun des dispositifs (5).

4. Système antivol selon l'une quelconque des revendications précédentes, dans lequel l'application numérique et la connexion mécanique déconnectable (20), qui relie le tag (4) au produit (3), sont configurées de manière que le retrait de ladite connexion ou sa déconnexion non-autorisée génère une alerte sur l'ordinateur fixe ou portable.

5. Système antivol selon la revendication 1, dans lequel le tag (4) comprend :
- un boîtier (15,18) qui contient la puce (16) et une source d'énergie électrique pour alimenter la puce,
- un circuit d'alimentation de la puce (16),
- une boucle (19) ouvrable et refermable pour attacher le tag (4) à un produit (3), la boucle comprenant deux parties (19a, 19b) comprenant ou consistant en des fils électriques, de sorte que dans un état fermé, la boucle fait partie d'un circuit connecté à la puce (16).

6. Système antivol selon l'une quelconque des revendications précédentes, dans lequel :
- au moins un des tags (4) comprend un accéléromètre configuré pour enregistrer des données liées aux mouvements du tag à l'intérieur de la zone de sécurité (10),
- le tag (4) est configuré pour envoyer lesdites données au sein du premier signal au dispositif de transmission électronique (5),
- le dispositif de transmission électronique (5) est configuré pour transmettre lesdites données à l'ordinateur (6) au sein du deuxième signal,
- l'application numérique est configurée pour enregistrer les données liées aux mouvements du tag (4), et éventuellement pour générer une alerte quand des mouvements non-autorisés sont enregistrés.

7. Système antivol selon l'une quelconque des revendications précédentes, dans lequel le premier signal est crypté.

8. Système antivol selon la revendication 6, dans lequel le premier signal est partiellement crypté.

9. Système antivol selon l'une quelconque des revendications précédentes, dans lequel le premier signal est prévu avec une estampille temporelle.

## Patentansprüche

1. Diebstahlschutzsystem zum Sichern von Produkten innerhalb eines definierten Raums (1), wobei das System Folgendes umfasst:
- mindestens ein Etikett (4), das mit einem elektronischen Chip (16) ausgestattet ist, der in der Lage ist, ein erstes Signal wiederholt und in einer ersten Technologie erzeugt zu übertragen, bei der es sich um die BLE (Bluetooth Low Energy)-Technologie handelt und wobei das Signal aus einer Folge von Werberahmen im BLE-Format besteht, wobei das Signal nur innerhalb eines begrenzten Umfangs um das Etikett (4) herum empfangen werden kann, wobei das Etikett mit einem ausgestellten Produkt durch eine lösbare mechanische Verbindung verbunden ist, wobei das Signal Informationen umfasst, die das Identifizieren des Produkts ermöglichen,
- eine elektronische Übertragungsvorrichtung (5), die an einer festen Position innerhalb des Umfangs installiert ist, wobei die Vorrichtung in der Lage ist, das erste Signal zu empfangen, wenn sich die Vorrichtung innerhalb des Umfangs befindet, und ein zweites Signal, das außerhalb des Umfangs empfangen werden kann, wiederholt und in einer zweiten Technologie erzeugt, die sich von der ersten Technologie unterscheidet, zu senden, wobei das zweite Signal mindestens die Informationen zum Identifizieren des Produkts sowie einen Wert umfasst, der mit dem Abstand zwischen dem Etikett und der Übertragungsvorrichtung verknüpft ist, und
- mindestens einen stationären oder tragbaren Computer (6), der dazu konfiguriert ist, das zweite Signal zu empfangen, und mit einer digitalen Anwendung ausgestattet ist, die dazu konfiguriert ist, auf der Grundlage des zweiten Signals das Vorhandensein des Etiketts innerhalb einer definierten Sicherheitszone (10), die um die Übertragungsvorrichtung (5) herum definiert ist, zu verwalten, wobei der stationäre oder tragbare Computer (6) auch dazu konfiguriert ist, einen Vorgang zum Koppeln des Etiketts (4) auszuführen, indem eine direkte Verbindung gemäß der ersten Technologie mit dem Etikett (4) hergestellt wird, ohne über die elektronische Übertragungsvorrichtung (5) zu verlaufen, wenn der elektronische Chip (16) in einem verbindungsfähigen Modus für BLE-Etiketten operiert, wobei der Kopplungsvorgang ausgeführt wird, indem eine direkte BLE-Verbindung zwischen dem tragbaren Computer und dem Etikett (4), eine Verbindung, die nicht über die elektronische Übertragungsvorrichtung (5) verläuft, hergestellt wird, wobei das BLE-Etikett (4) während des Kopplungsvorgangs in einem verbindungsfähigen Modus operiert, nach dem die Kopplung ausgeführt wurde, wobei das Etikett (4) in einen nicht verbindungsfähigen Modus wechselt, um eine erneute Verbindung und somit eine erneute Kopplung zu verhindern.

2. Diebstahlschutzsystem nach Anspruch 1, **dadurch gekennzeichnet, dass** die digitale Anwendung eine Warnmeldung erzeugt, wenn das Etikett (4) aus der Sicherheitszone herausbewegt wird.

3. Diebstahlschutzsystem nach Anspruch 1, **dadurch gekennzeichnet, dass** es mehrere der elektronischen Übertragungsvorrichtungen (5) umfasst, die in dem Raum (1) verteilt sind, so dass den Vorrichtungen (5) unterschiedliche Sicherheitszonen (10) zugewiesen sind, und wobei jede Vorrichtung (5) kontinuierlich mit einem oder mehreren Etiketten (4), die mit den in den jeweiligen Zonen ausgestellten Produkten verbunden sind, in Verbindung steht, und wobei der oder die Computer kontinuierlich mit jeder der Vorrichtungen (5) in Verbindung stehen.

4. Diebstahlschutzsystem nach einem der vorhergehenden Ansprüche, wobei die digitale Anwendung und die lösbare mechanische Verbindung (20), die das Etikett (4) mit dem Produkt (3) verbindet, derart konfiguriert sind, dass die Entfernung der Verbindung oder ihre nicht autorisierte Trennung eine Warnmeldung auf dem stationären oder tragbaren Computer erzeugt.

5. Diebstahlschutzsystem nach Anspruch 1, wobei das Etikett (4) Folgendes umfasst:
- ein Gehäuse (15, 18), das den Chip (16) und eine elektrische Energiequelle zur Stromversorgung enthält,
- eine Stromversorgungsschaltung für den Chip (16),
- eine Schlaufe (19), die zum Anbringen des Etiketts (4) an einem Produkt (3) geöffnet und geschlossen werden kann, wobei die Schlaufe zwei Teile (19a, 19b) umfasst, die elektrische Drähte umfassen oder daraus bestehen, so dass die Schlaufe in einem geschlossenen Zustand einen Teil einer mit dem Chip (16) verbundenen Schaltung bildet.

6. Diebstahlschutzsystem nach einem der vorhergehenden Ansprüche, wobei:
- mindestens eines der Etikette (4) einen Beschleunigungsmesser umfasst, der dazu konfiguriert ist, Daten aufzuzeichnen, die mit den Bewegungen des Etiketts innerhalb der Sicherheitszone (10) verknüpft sind,
- das Etikett (4) dazu konfiguriert ist, die Daten im ersten Signal an die elektronische Übertragungsvorrichtung (5) zu senden,
- die elektronische Übertragungsvorrichtung (5) dazu konfiguriert ist, die Daten im zweiten Signal an den Computer (6) zu übertragen,
- die digitale Anwendung dazu konfiguriert ist, die Daten aufzuzeichnen, die mit den Bewegungen des Etiketts (4) verknüpft sind, und optional eine Warnmeldung zu erzeugen, wenn nicht autorisierte Bewegungen aufgezeichnet werden.

7. Diebstahlschutzsystem nach einem der vorhergehenden Ansprüche, wobei das erste Signal verschlüsselt ist.

8. Diebstahlschutzsystem nach Anspruch 6, wobei das erste Signal teilweise verschlüsselt ist.

9. Diebstahlschutzsystem nach einem der vorhergehenden Ansprüche, wobei das erste Signal mit einem Zeitstempel versehen ist.

## Claims

1. Anti-theft system for securing products inside a defined space (1), the system comprising:
- at least one tag (4) provided with an electronic chip (16) capable of transmitting a first signal in a repetitive manner and generated in a first technology, which is the BLE technology (Bluetooth Low Energy) and in which the first signal consists of a sequence of advertising frames in BLE format, the signal only capable of being received within a limited perimeter around the tag (4), the tag being connected to a product on display by a disconnectable mechanical connection, the signal comprising information which allows the product to be identified,
- an electronic transmitting device (5), installed at a fixed position within said perimeter, the device being capable of receiving the first signal when the device is located within said perimeter, and of sending, in a repetitive manner, a second signal capable of being received outside the perimeter and generated in a second technology that is different from the first technology, the second signal comprising at least the information for identifying the product as well as a value related to the distance between the tag and the transmitting device, and
- at least one fixed or portable computer (6), configured such that it receives the second signal and provided with a digital application which is configured such that it manages, on the basis of said second signal, the presence of the tag within a defined security zone (10) around the transmitting device (5), the fixed or portable computer (6) further being configured such that it carries out a procedure for pairing the TAG (4) by producing a direct link according to the first technology with the TAG (4) without passing via the electronic transmitting device (5), when the electronic chip (16) is operating in a so-called connectable mode, for BLE tags, the procedure for pairing being carried out by producing a direct link between the portable device and the tag (4), a link, without passing via the electronic transmitting device (5), the BLE tag (4) operating in connectable mode during the procedure for pairing, after the pairing has been carried out, the tag (4) switching to non-connectable mode in order to prevent a new connection and therefore a new pairing.

2. Anti-theft system according to claim 1, **characterised in that** the digital application generates an alert when the tag (4) is moved outside of the security zone.

3. Anti-theft system according to claim 1, **characterised in that** it comprises a plurality of said electronic transmitting devices (5) distributed within said space (1), such that distinct security zones (10) are allocated to the devices (5), and wherein each device (5) continuously communicates with one or more tags (4) connected to the products on display in the respective zones, and wherein the one or more computers continuously communicate with each of the devices (5).

4. Anti-theft system according to any one of the preceding claims, wherein the digital application and the disconnectable mechanical connection (20), which connects the tag (4) to the product (3), are configured such that the removal of said connection or the unauthorised disconnection thereof generates an alert on the fixed or portable computer.

5. Anti-theft system according to claim 1, wherein the tag (4) comprises:
- a case (15, 18) that contains the chip (16) and an electrical energy source for powering the chip,
- a power supply circuit for the chip (16),
- a loop (19) that can be opened and closed for attaching the tag (4) to a product (3), the loop comprising two parts (19a, 19b) comprising or consisting of electric wires, such that in a closed state, the loop forms a part of a circuit connected to the chip (16).

6. Anti-theft system according to any one of the preceding claims, wherein:
- at least one of the tags (4) comprises an accelerometer configured such that it records data linked to the movements of the tag within the security zone (10),
- the tag (4) is configured such that it sends said data in the first signal to the electronic transmitting device (5),
- the electronic transmitting device (5) is configured such that it transmits said data to the computer (6) in the second signal,
- the digital application is configured such that it records the data related to the movements of the tag (4), and optionally such that it generates an alert when unauthorised movements are recorded.

7. Anti-theft system according to any one of the preceding claims, wherein the first signal is encrypted.

8. Anti-theft system according to claim 6, wherein the first signal is partially encrypted.

9. Anti-theft system according to any one of the preceding claims, wherein the first signal is provided with a timestamp.
